# EUROPEAN PATENT APPLICATION

(11) **EP 2 512 111 A1**
(43) Date of publication of application: **17.10.2012**
(21) Application number: 11305449.8
(22) Date of filing: 15.04.2011
(51) Int. Cl.: H04M 3/42

(54) **Method and device for notifying parties to a communication in a communication network**

(71) Applicant: Alcatel Lucent, 75007 Paris (FR)
(72) Inventor: Shankar, Narayanan, 600045 Chennai (IN); Chandran, Venkatesch, 600026 Chennai (IN)
(74) Representative: Sciaux, Edmond

(57) **Abstract**

Method of notifying parties to a communication in a communication network between a terminating party and at least one originating party, comprising the steps of monitoring the state of said terminating party on said network, logging identifying information of all communications attempts from originating parties to said terminating party during a period when said terminating party is in a Do Not Disturb (DND) state, and notifying at least one of said terminating and/or originating parties, from information contained in said attempted communication identifying information, when said terminating party exits the DND state

## Description

The present invention concerns a method and device for notifying parties to a communication in a communication network. Specifically, the present invention concerns parties in an unreachable or a "Do Not Disturb" state.

### BACKGROUND

This section introduces aspects that may be helpful in facilitating a better understanding of the invention. Accordingly, the statements of this section are to be read in this light and are not to be understood as admissions about what is in the prior art or what is not in the prior art.

A growing number of communication networks nowadays give users the option to be temporarily undisturbed.

Such communication networks may comprise such networks or technologies as POTS (plain old telephone service), PBX (private branch exchange), cellular or satellite telephone, as well as VoIP (voice over Internet Protocol) or IMS (IP Multimedia Subsystem).

Depending on the network, the user has the option to unplug a phone line, turn off a telephone, request to the switch board that all calls be diverted automatically to another number, for example voicemail, or be put in a DND state (Do Not Disturb).

However, this can be frustrating for both the user receiving calls wishing to be temporarily undisturbed, and the user making the call.

For example, for the user receiving the call, also referred to as the callee, it is frustrating to balance the need for silence against the fear of missing out on an important call and/or not knowing who has called.

In the same situation, for the user making the call, also known as the caller, it is frustrating to have to continuously have to attempt the call until the call goes through. It is a waste of time and effort.

This situation is of course not limited to making telephone calls, but also exists for text messaging, chat communications, VoIP communications, etc.

A need exists to better deal with this situation.

### BRIEF SUMMARY

An object of the present is therefore a method of notifying parties to a communication in a communication network between a terminating party and at least one originating party, comprising the steps of monitoring the state of said terminating party on said network, logging identifying information of all communications attempts from originating parties to said terminating party during a period when said terminating party is in a Do Not Disturb (DND) state, and notifying at least one of said terminating and/or originating parties, from information contained in said attempted communication identifying information, when said terminating party exits the DND state.

Another object of the present is a device adapted for notifying parties to a communication in a communication network between a terminating party and at least one originating party, said communication network being adapted to route and manage communication sessions between a terminating party and at least one originating party, said device comprising monitoring means adapted to monitor the status of said terminating party; logging means adapted to record identifying information of communications attempts effected from said originating parties to said terminating party, and notification means adapted to communicate information data logged by said logging means to either of the originating parties or the terminating party, wherein said logging means is enabled in function of the state of the terminating party as determined by said monitoring means, and wherein said notification means is configured to trigger communication when said terminating party changes its status.

Yet a further object is a network comprising a device as above.

Yet a further object is a computer program comprising computer program code means adapted to perform at least all the steps of the method disclosed above.

The different embodiments within the context of the invention have as virtue the ability of notifying callers of the ability to reach their destination party.

In other embodiments, the uncontactable party, for instance the party in a DND state, will further have a log of communication attempts during his or her time being uncontactable.

### BRIEF DESCRIPTION

Some embodiments of devices and methods in accordance with embodiments of the present invention are now described, by way of example only, and with reference to the accompanying drawings, in which:
Figure 1 illustrates a general communication system according to a first embodiment;
Figures 2A and 2B illustrates schematically the operation of the embodiment of figure 1 according to two variants;
Figure 3 illustrates an IMS network communication system according to another embodiment;
Figures 4A and 4B illustrates schematically the variant operations of the embodiment of figure 3; and
Figure 5 illustrates an IMS network communication system according to yet another embodiment.

### DETAILED DESCRIPTION

For brevity and consistence in the following description, the present description will refer to DND state (Do Not Disturb) state as the general state in which a party does not wish to, or cannot be, immediately contacted. It must be understood that the DND state comprises unhooking a phone, activating active diverts, entering a Do Not Disturb tag or state in a chat or instant messaging network, and all other states or actions that would lead a user to not be contactable for a user-controlled period. Indeed, the DND state is independent of the communication network used, the actions taken to arrive at this state, or the protocols executed.

Similarly, the following description will make use of the term "terminating party" to denote the terminal of a user receiving a communication attempt. The term "originating party" denotes the terminal of a user initiating, originating, or sending out a communication attempt.

A communication attempt is a general term used herein to denote all communications, including but not limited to, SMS message, telephone calling, VoIP calling, instant messaging, chatting, etc.

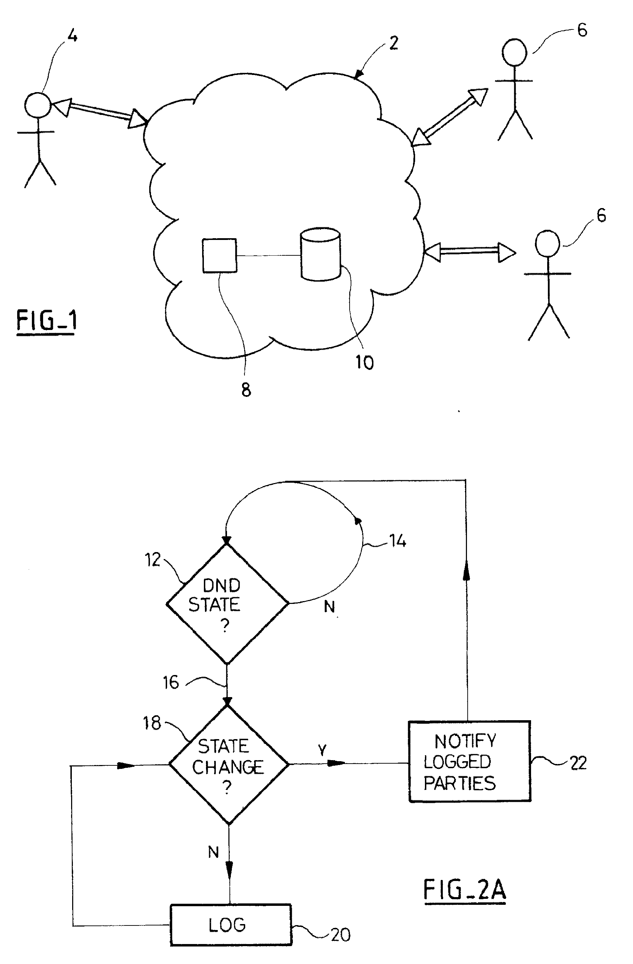

Figure 1 illustrates a first general embodiment of a communication network 2, through which a plurality of parties communicate, whether by voice, text, internet protocol, or otherwise.

The communication network 2 represents any communication network allowing for a communication exchange between the parties, for example based upon POTS (plain old telephone service), PBX (private branch exchange), internet, cellular or satellite telephone networks, as well as VoIP (voice over Internet Protocol) or IMS (IP Multimedia Subsystem) technologies.

For the purposes of the present description, are illustrated one terminating party 4, and a plurality (two are illustrated) of originating parties 6.

Of course, it will be understood that a given party can be both a terminating party 4 or an originating party 6 depending on whether they have an incoming communication session or originate an outgoing communication session, respectively.

The communication network 2 comprises a Do No Disturb (DND) control device 8, which is adapted to manage communication sessions to parties which cannot be reached or which have chosen not to be disturbed.

The DND control device 8 is adapted to store in a storage device 10 originating party information, for example: phone number, instant messaging identity, Short Message Service (SMS) sender identity, etc. The DND control device 8 is further adapted to store in the storage device 10 context information of the originating party information, for example, time of the communication, type of communication, urgency level, etc.

The storage device 10 is for example a database storage.

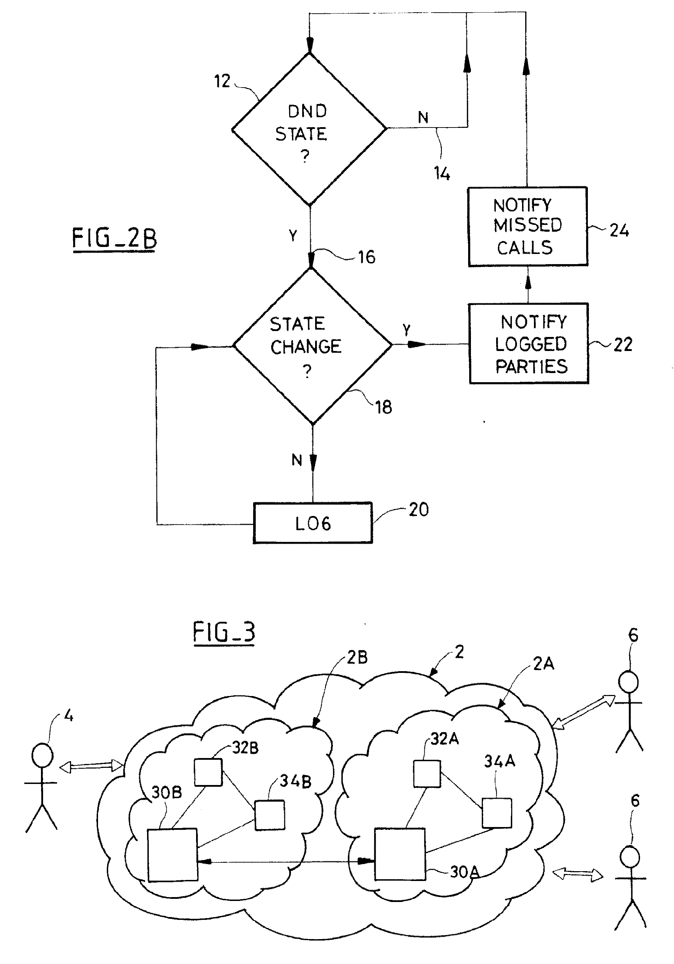

Figures 2A and 2B illustrate schematically the operation of the embodiment of figure 1, according to two preferential modes of operation.

Initially, all parties effect communication sessions as per usual through and by way of the communication network 2.

The DND control device 8 monitors (step 12) all communication attempts transiting through the communication network 2.

If the communication attempt from a originating party 6 to a terminating party 4 successfully concludes, the DND control device 8 implicitly determines that the terminating party is not in a DND state. The DND control device 8 will simply continue to monitor communications passively (step 14), without playing an active role itself.

However, if for some reason the communication originated by an originating party 6 does not terminate correctly, or if the terminating party 4 has precedingly indicated that he is not to be disturbed and thus entered into a DND state, the DND control device 8 concludes that the terminating party is in a DND state (step 16).

Once the DND control device 8 is aware (implicitly or explicitly) of the DND state of a party, the device 8 will continuously check the state of the party at regular intervals, preferably frequent intervals, for example every 15 seconds, for example every 5 seconds, to determine whether the party has left the DND state (step 18).

While the terminating party 4 is in a DND state, the DND control device 8 will log, and continue logging, identifying information of the originating party and/or contextual information of the communication attempt in the storage device 10 (step 20). That is to say, all communication attempts made by originating party 6 to the terminating party 4 are recorded, for example recorded automatically.

It is worth noting at this point that the DND control device 8 does not in and of itself affect the communication between the originating party 6 and the terminating party 4. The communication network 2 itself will continue to execute all ordinary communication handling functionalities. As such, when an originating party 6 attempts a communication to a terminating user 4 in a DND state (for whatever reason), the originating party 6 will be notified of the indisponibility of the terminating party 4 according to ordinary communication handling protocols, without intervention of the DND control device 8.

When the DND control device 8 detects a change out of the DND state at STEP 18, the DND control device 8 notifies all the originating parties 6 having attempted to communicate with the terminating party of the change of state, of this change of state (step 22). The contact details of the originating parties were logged at STEP 20, and logged in the storage device 10.

This functionality now allows all the originating parties to retry their communication attempt to the terminating party 4 knowing that the terminating party 4 is available to take communications again.

According to a variant of the present embodiment, illustrated at figure 2B only, the DND control device 8 further notifies the terminating party 4 having left the DND state of the identity and/or context of the communication attempts made during his period in the DND state (STEP 24). This information was logged at STEP 20, and logged in the storage device 10.

This functionality allows the terminating party 4 leaving a DND state to have a record of missed communications.

According to a second embodiment, the teachings of the present invention may also be applied specifically to an IP Multimedia Subsystem (IMS) network architecture, illustrated at figure 3.

In this embodiment, the communications network 2 uses the standard Internet Protocol (IP), comprising an IMS layer, for communicating between at least one originating party 6 and one terminating party 4, wherein each party 4, 6 operates in a separate IMS network with its own communication control functions. The originating communication network comprising the originating parties 6 will be referred to as the network 2A, and the terminating communication network comprising the terminating party 4 will be referred to as the network 2B. The network 2A and the network 2B together form the communication network 2.

As the skilled person in the art knows, each of the IMS layer of the communications network 2 comprises various Call Session Control Function (CSCF) servers 30 adapted to process signaling packets and manage communication exchange in the communication network 2 between the various parties 4, 6. In particular, it will be understood by the skilled person that for the purposes of the present description, the CSCF 30 comprises the Proxy-CSCF, the Serving-CSCF and the Interrogating-CSCF.

Furthermore, for the purposes of the following description, and since each local IMS network 2A, 2B is identical to each other, the following description will refer numerically to the devices, and an appended alphabetic character 'A', 'B' will identify to which network 2A, 2B, respectively it belongs to.

The communication network 2 further comprises one or more Application Servers (AS) 34 in communication with the local CSCF 30 using Session Initiation Protocol (SIP), and is adapted to host and execute services.

The CSCF 30 is associated with a Home Subscriber server (HSS) 32 comprising the identity and subscription-related information of each party 4, 6 operating on the communication network. Furthermore, the HSS 32 performs authentication and authorization of the user, and can provide information about the subscriber's location and IP information.

In particular, the HSS 32 manages the status of each party 4, 6 operating on the communication network 2. For example, the status information may indicate that a party 4, 6 is "away", "online", "do no disturb", etc. Some of these states will be associated with specific communication handling. For example, any party 6 wishing to communicate with a party 4 having set its presence status information to "Do Not Disturb" will be blocked from doing so by the CSCF 30 after interrogation of the Application server 34 in conjunction with the HSS 32.

The communication network 2, and in particular each local network 2A, 2B, etc further comprises a DND control device 8 of similar state and function as that illustrated and described for the embodiments of figure 1, which may for example be disposed in, or interfacing with, the application server 34.

The DND control device 8 is adapted to monitor and log communication sessions to parties 4 which cannot be reached or which have chosen not to be disturbed from their busy status.

The DND control device 8 is adapted to store in an associated storage means 10 originating party information, for example: phone number, instant messaging identity, Short Message Service (SMS) sender identity, etc.. The originating party information may for example be retrieved from the Application Server 34 or from the HSS 32 information upon the initiation of a communication attempt.

In practice, the Application Server 34 can periodically probe the HSS 32 for presence status information updates, and store a local version for quick access.

The DND control device 8 is further adapted to store in the storage means 10 context information of the originating party information, for example, time of the communication, type of communication, urgency level, etc.

The storage device 10 is for example a database storage area in the application server 34.

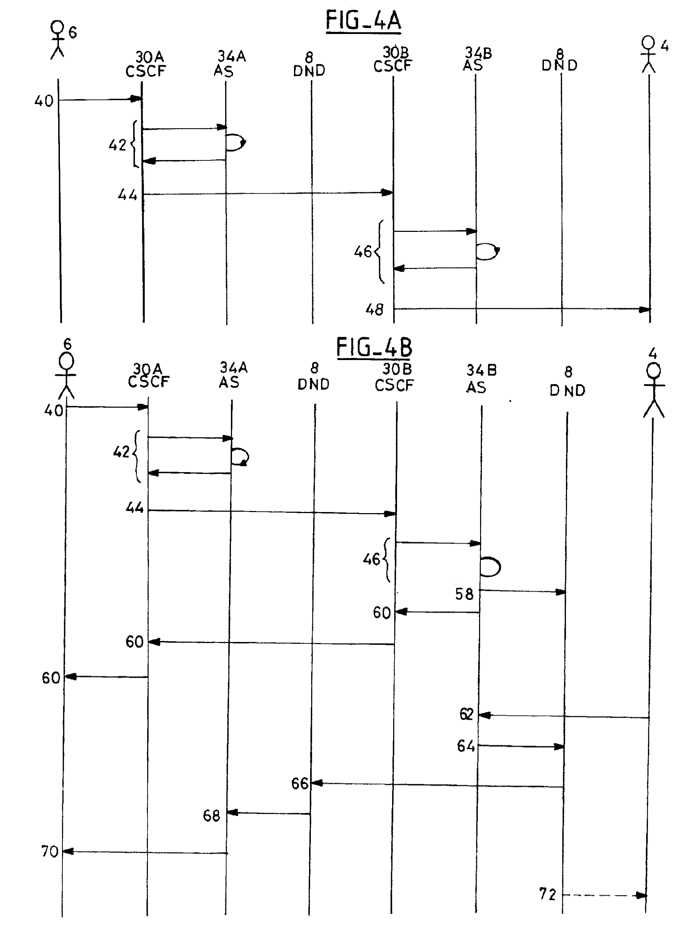

Figures 4A and 4B illustrate schematically the operation of the embodiment of figure 3.

Initially, all parties effect communication sessions as per usual through and by way of the communication network 2 and its CSCF servers 30, as illustrated at figure 4A for a successful communication connection.

The DND control device 8 logs communication attempts in the communication network 2.

More specifically, when an originating party 6 wishes to attempt a communication to a terminating user 4, a communication command is issued to the local CSCF 30A, for example using the "invite" command (STEP 40). The CSCF 30A then verifies the status of the originating party 6 with the application server 34A, for authorization to communicate, etc (STEP 42). For example the Application Server 34A communicates with the HSS 32A to verify the originating party's authorization to call, or the Application Server 34A verifies with a locally stored version.

If the state of the originating party 6 allows for the communication, the application server 34A indicates this to the CSCF 30A (step 42).

The local CSCF 30A can then transfer the call to the terminating CSCF 30B for call handling (step 44).

Now, the terminating CSCF 30B checks with the terminating Application Server 34B the authorization to transfer a communication attempt to the terminating user 4 (STEP 46).

For example the Application Server 34B communicates with the HSS 32B to verify the terminating party's ability to receive calls, or the Application Server 34B verifies with a locally stored version of the status of the terminating party 4 (STEP 46). If the state of the terminating party 4 allows for the communication, the application server 34B indicates this to the CSCF 30B.

If the authorization is given, the terminating CSCF 30B transfers the communication to the terminating party 4 (STEP 48).

Here, the DND control device 8 has also monitored the return from the application server 34 authorisation check for this information, and determined that the terminating party is not in a DND state. The DND control device 8 will simply continue to monitor communications passively, without intervening.

However, turning to Figure 4B, if the HSS 34B or the AS 34B were to return a DND state at STEP 46 when polled for the status of the terminating party 4, the application server 34 will indicate this to the CSCF 30 which will in turn return an error message to the originating party 6 (STEPS 58 and 60). More specifically, once the inquiry of the status of the terminating party 4 at STEP 46 indicates a busy state (Do Not Disturb or similar), the terminating DND control device 8 detects this failure and will log, at STEP 58, the originating party's 6 information. For example, the DND control device 8B logs the communication attempt by the originating party 6 and stores in the storage means 10 the identifying information of the originating party 6 as retrieved from the HSS 32 or the application server 34. Context information of this exchange, for example the time of the communication may also be stored in the storage means 10 by the DND control device 8.

At STEP 60, the Application Server 34B will follow standard protocol to notify the communication failure for cause of busy terminating party to the CSCF 30B, which will in turn notify the originating CSCF 30A, which will in turn notify the originating party 6.

Now, say, some time later, the terminating party 4 changes his state to "available", by notifying the HSS 32B via the application server 34 (STEP 62). The DND control device 8B either detects this change of status, or is communicated the information from the Application Server 34B (STEP 64).

The DND control device 8B therefore notifies all the originating parties 6 having attempted to communicate with the terminating party of the change of state, of this change of state. To this end, more specifically, the DND control device 8 will notify the DND Control Device 8A linked to the Application Server 34A of the originating party 6 (STEP 66) of the change of status. The DND control Device 8A triggers the Application Server 33A (STEP 68) to notify the originating party 6 who had previously been unable to communicate with the terminating user 4 (STEP 70).

The originating parties 6 may now retry their communication attempt to the terminating party 4, knowing that the terminating party 4 is now available to receive communication attempts.

According to an variant of the present embodiment, also illustrated in figure 4B in dotted lines, the DND control device 8B further notifies the terminating party 4 having left the DND state of the identity and/or context of the communication attempts made during his period in the DND state (STEP 72). This information was logged at STEP 58, and stored in the storage device 10.

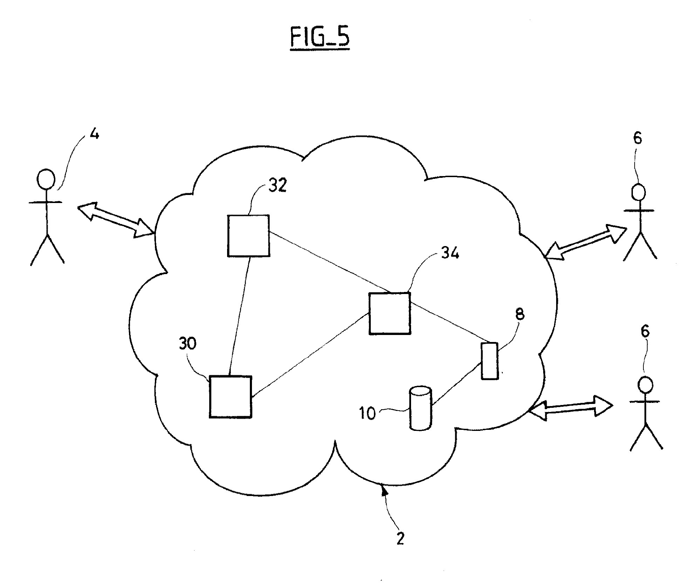

The above description illustrated the structure and function of the invention according to an exemplary embodiment based on an IMS communication network 2 founded on a plurality of local IMS networks 2A, 2B. Thus, each local network 2A, 2B comprises its own CSCF 30, HSS 32, Application Server 34 and DND control device 8. Of course, the skilled person in the art will understand that the invention applies equally well to an IMS network comprising a single CSCF, a single HSS, and a single Application Server, as shown on figure 5. In this context, the DND control device 8 acts as both the terminating DND control device 8B of Figure 3 and the originating terminating DND control device 8A according to the teachings above.

Furthermore, the above described embodiments describe a case where the DND control device 8 is permanently in operation, for all originating parties 6, and for all terminating parties 4. However, it is within the scope of the present invention for the parties 4, 6 to subscribe individually and punctually for such services with their local Application Server. In this case, the local Application Server will distribute the notifications only if the party 4, 6 registered for the service.

In variants of the above described embodiments, the services of the DND control device 8 may of course be selectively subscribed to by either of the originating party 6 or the terminating party 4, either punctually after each failed communication attempt, or more permanently with the application server in the case of an IMS network.

Furthermore, although the CSCF 30 is illustrated in the above embodiments as a unitary device, in practice the CSCF may represent multiple distinct physical entities, and there may in fact be multiple CSCF group in various sub network communicating together collectively to form the illustrated communication network 2.

Of course, the skilled person in the art will recognize the the DND control device can constitute either of a hardware device, a software module, or a mix of hardware and software, and may be associated with an application within the application space or with an interface.

A person of skill in the art would readily recognize that steps of various above-described methods can be performed by programmed computers. Herein, some embodiments are intended to cover program storage devices, e.g., digital data storage media, which are machine or computer readable and encode machine-executable or computer-executable programs of instructions where said instructions perform some or all of the steps of methods described herein. The program storage devices may be, e.g., digital memories, magnetic storage media such as a magnetic disks or tapes, hard drives, or optically readable digital data storage media. The embodiments are also intended to cover computers programmed to perform said steps of methods described herein.

The present inventions may be embodied in other specific apparatus and/or methods. The described embodiments are to be considered in all respects as only illustrative and not restrictive. In particular, the scope of the invention is indicated by the appended claims rather than by the description and figures herein. All changes that come within the meaning and range of equivalency of the claims are to be embraced within their scope.

## Claims

1. Method of notifying parties to a communication in a communication network between a terminating party and at least one originating party, comprising the steps of:
- monitoring the state of said terminating party on said network,
- logging identifying information of all communications attempts from originating parties to said terminating party during a period when said terminating party is in a Do Not Disturb (DND) state, and
- notifying at least one of said terminating and/or originating parties, from information contained in said attempted communication identifying information, when said terminating party exits the DND state.

2. Method according to claim 1, wherein the originating parties (6) are notified of the change of state of the terminating party (4).

3. Method according to claim 1 or claim 2, further comprising the step of communicating the logged identifying information to the terminating party, thereby enabling the terminating party to identify which originating parties attempted to communicate with the terminating party, during the period the terminating party (4) was in a DND state.

4. Method according to any one of the preceding claims, wherein the identifying information comprises a communication identity, adapted to be used to target and communicate with a specific party.

5. Method according to any one of the preceding claims, wherein the identifying information comprises a time indication of a communication attempt.

6. Method according to any one of the preceding claims, which is enabled for the originating party (6) and/or the terminating party (4) by preregistration.

7. Device adapted for notifying parties to a communication in a communication network between a terminating party and at least one originating party, said communication network being adapted to route and manage communication sessions between a terminating party and at least one originating party, said device comprising:
- monitoring means adapted to monitor the status of said terminating party;
- logging means adapted to record identifying information of communications attempts effected from said originating parties to said terminating party, and
- notification means adapted to communicate information data logged by said logging means to either of the originating parties or the terminating party, wherein said logging means is enabled in function of the state of the terminating party as determined by said monitoring means, and
wherein said notification means is configured to trigger communication when said terminating party changes its status.

8. Device according to claim 7, wherein the logging means is enabled for a determined terminating party and/or originating by preregistration of the party with the device.

9. Device according to any one of claims 7 or 8, wherein said communication network is an IP Multimedia system (IMS) network, and said device is integral to an application server in said IMS network.

10. Communication network comprising a device according to any one of claims 7 to 9.

11. A computer program comprising computer program code means adapted to perform all the steps of either one of claims 1 to 6 when the program is run on a processor hardware.
